# EUROPEAN PATENT APPLICATION

(11) **EP 3 308 900 A1**
(43) Date of publication of application: **18.04.2018**
(21) Application number: 17186219.6
(22) Date of filing: 14.08.2017
(51) Int. Cl.: B23K 35/30, B23P 15/00, B23K 20/16, B23K 35/00, F01D 5/34, B23K 101/00

(54) **HYBRID COMPONENT AND METHOD OF MAKING**

(30) Priority: 13.10.2016 US 201615292802
(71) Applicant: United Technologies Corporation, Farmington, CT 06032 (US)
(72) Inventor: BOCHIECHIO, Mario P., Vernon, CT Connecticut 06066 (US); LIN, Wangen, S. Glastonbury, CT Connecticut 06073 (US); SZELA, Edward R., West Springfield, MA Massachusetts 01089 (US)
(74) Representative: Gittins, Alex Michael

(57) **Abstract**

A method of forming a hybrid component (10) having an axis of rotation (18) includes forming a first substrate (20) having a first average grain size, forming a second substrate (22) having a second average grain size different from the first average grain size, positioning an interlayer (24) on one of the first and second substrates (20, 22), positioning a portion of the first substrate (20) adjacent a portion of the second substrate (22) such that the interlayer (24) extends between the portion of the first substrate (20) and the portion of the second substrate (22), heating the first and second substrates (20, 22) and the interlayer (24) at a temperature below the melting points of the first and second substrates (20, 22) to melt the interlayer (24), and isothermally solidifying the interlayer (24) to form a solid-state joint (26) between the portions of the first and second substrates (20, 22).

## Description

### BACKGROUND

Traditionally, components of advanced engines are fabricated from a single material with uniform composition and microstructure. During operation, however, regions radially closer to a rotational component's axis of rotation generally operate at lower temperatures and higher stresses than the radially outer regions. A component fabricated from a single material does not possess optimized material properties for both the radially inner and outer regions to deal with the different radial stresses and temperatures in the part. As a result, the rotational component's performance can be severely limited. Presently, fabrication methods, such as solid-state joining or dual property heat treatments, can be used to produce a rotational component with improved location-specific properties. In the case of a rotational component having different materials (*e.g*., blades of one material and a rotor disk of another material), however, fabrication is very complex due to the additional processing steps required and typically results in a region of weakness near the joint and/or transition zone between the two different materials.

To maximize performance, different regions of the rotational component should include different materials with location-optimized properties. For instance, regions radially closer to the axis of rotation of the rotational component benefit from greater low-temperature tensile strength, burst capability, and resistance to low-cycle fatigue, while regions at a greater radial distance from the component's centerline benefit from having greater high-temperature creep and rupture strength as well as increased defect tolerance.

### SUMMARY

A method of forming a hybrid component having an axis of rotation includes forming a first substrate having a first average grain size, forming a second substrate having a second average grain size different from the first average grain size, positioning an interlayer on one of the first and second substrates, positioning a portion of the first substrate adjacent a portion of the second substrate such that the interlayer extends between the portion of the first substrate and the portion of the second substrate, heating the first and second substrates and the interlayer at a temperature below the melting points of the first and second substrates to melt the interlayer, and isothermally solidifying the interlayer to form a solid-state joint between the portions of the first and second substrates.

A method of forming a hybrid disk having an axis of rotation includes forming a bore substrate having a first average grain size, forming a rim substrate having a second average grain size different from the first average grain size, positioning an interlayer on one of the bore substrate or the rim substrate, positioning a portion of the bore substrate adjacent to a portion of the rim substrate such that the interlayer contacts both the portion of the bore substrate and the portion of the rim substrate, heating the bore and rim substrates and the interlayer at a temperature below the melting points of the bore and rim substrates to melt the interlayer, and isothermally solidifying the interlayer to form a solid-state joint between the bore and rim substrates along a web of the hybrid disk.

A hybrid disk includes a bore portion having an average grain size between ASTM 11 and ASTM 9, a rim portion having an average grain size between ASTM 8 and ASTM 6, and a web portion located between the bore portion and the rim portion. The web portion includes an isothermally solidified solid-state joint formed adjacent to a radially outer surface of the bore portion and a radially inner surface of the rim portion. The isothermally solidified joint is angled between 5 degrees and 85 degrees relative to an axis of rotation of the hybrid disk.

### BRIEF DESCRIPTION OF THE DRAWINGS

Fig. 1 is a view of a hybrid rotor disk.
Fig. 1A is a radial cross-section view of the hybrid rotor disk of Fig. 1.
Fig. 2 is a view of an unjoined bore substrate and a rim substrate used to form a hybrid rotor disk.
Fig. 3 is a view of the substrates of Fig. 2 with an interlayer spaced therebetween.
Fig. 4 is a view of the substrates following bonding.
Fig. 5 is a schematic diagram of a method of producing a hybrid rotor disk.

### DETAILED DESCRIPTION

The present disclosure relates generally to fabrication processes for the manufacture of components having regions of differing microstructures and/or composition. Frequently, operating conditions demand components containing different regions, of which differing material properties are needed to optimize performance (*e.g*., reduce fuel burn, increase overall engine efficiency). Examples where operating conditions may demand this invention are components of advanced engines. Typically, advanced engines operate more efficiently at higher temperatures and pressures.

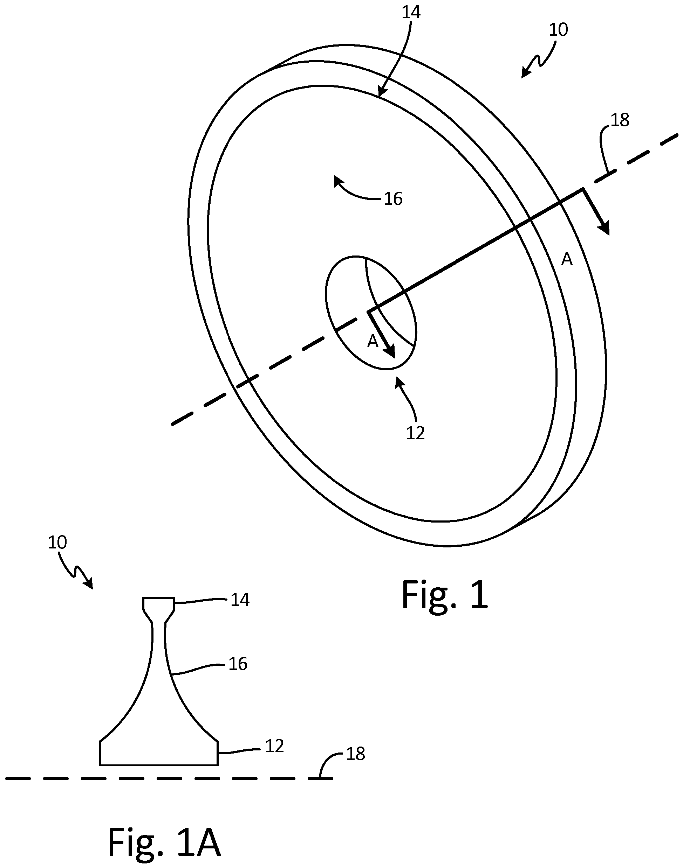

A hybrid component and a method of making the hybrid component are disclosed herein. One example of a hybrid component is a rotor disk for a compressor or turbine section of a gas turbine engine. Figs. 1 and 1A illustrate views of a hybrid disk. Fig. 1 shows a perspective view of hybrid disk 10 and Fig. 1A shows a radial cross-section of hybrid disk 10. Hybrid disk 10 includes bore region 12, rim region 14 and web region 16. During operation, hybrid disk 10 rotates about axis of rotation (centerline axis) 18. Bore region 12 is located radially inward of rim region 14 and web region 16 and rim region 14 is located radially outward of bore region 12 and web region 16. Bore region 12 is generally the central hub of hybrid disk 10 and can contain a through-hole for mounting hybrid disk 10 to a shaft. Web region 16 connects bore region 12 and rim region 14 so as to form a monolithic or one-piece hybrid rotor disk. The radially outer surface of hybrid disk 10 is located at rim region 14. Blade airfoils (not shown) are connected to hybrid disk 10 at the outer surface of rim region 14. As shown in Fig. 1A, hybrid disk 10 can have its greatest axial thickness (viewed left-to-right) at bore region 12. The region of least axial thickness can be at rim region 14 or a portion of web region 16 near rim region 14.

As described herein, hybrid disk 10 is formed from two substrates having differing material compositions and/or grain structures. In some cases, the two substrates are forged or cast alloys. The two substrates are joined together to form hybrid disk 10 by transient liquid phase (TLP) bonding. The TLP bonding process produces a solid-state joint between the two substrates that has a uniform composition profile and is tolerant to surface oxides and geometry defects. The joint is located in a lower stress region of hybrid disk 10, for example, in web region 16. By joining two substrates having differing material compositions and/or grain structures, hybrid disk 10 can be designed such that bore region 12 and rim region 14 are each optimized for expected operating conditions and so the joint is placed in a lower stress region of hybrid disk 10.

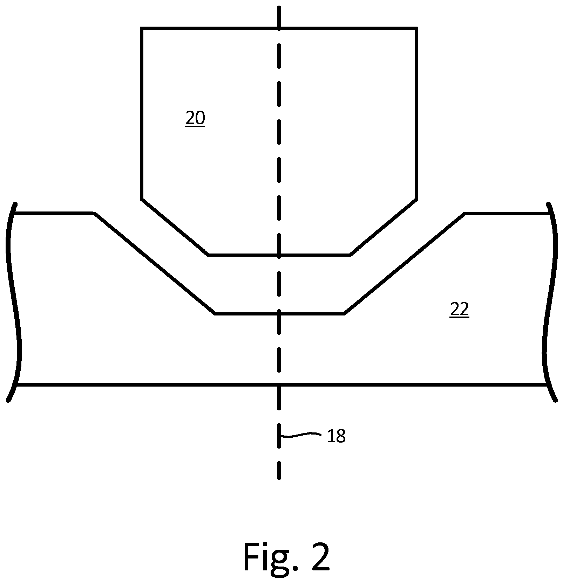

Fig. 2 illustrates unjoined bore substrate 20 and rim substrate 22. As will be described in greater detail, bore substrate 20 forms bore region 12 and part of web region 16 of hybrid disk 10 and rim substrate 22 forms rim region 14 and part of web region 16. Bore substrate 20 is shaped (by forging, casting and/or machining) to approximate the finished shape of bore region 12 of hybrid disk 10. Bore substrate 20 contains materials generally optimized for bore region 12 of hybrid disk 10. In some embodiments, bore substrate 20 contains cast, wrought and/or powder metallurgy alloys having high degrees of tensile strength, low-temperature strength (resistance to low cycle fatigue) and burst capability. Examples of types of suitable alloys for bore substrate 20 include PRM48, ME16, IN100, IN1718, U720, U720li, ME3, Alloy 10 and low solvus, high refractory (LSHR) powder metallurgy alloys. In some examples, bore substrate 20 can include less than 0.06% carbon. Bore substrate 20 typically has a finer grain structure than rim substrate 22. In some embodiments, bore substrate 20 has an average grain size of ASTM E112-13 ("ASTM") size 9 to 11. Bore substrate 20 can be heat treated before being used to form hybrid disk 10. For example, in one embodiment, bore substrate 20 undergoes subsolvus heat treatment prior to TLP bonding. Such heat treatment provides bore substrate 20 with properties generally desirable for bore region 12 of hybrid disk 10. This pre-bonding heat treatment can be performed before or after shaping of bore substrate 20.

Rim substrate 22 is shaped (by forging, casting and/or machining) to approximate the finished shape of rim region 14 of hybrid disk 10. Rim substrate 22 contains materials generally optimized for rim region 16 of hybrid disk 10. In some embodiments, rim substrate 16 contains cast, wrought and/or powder metallurgy alloys having high degrees of resistance to creep, rupture and cracking. Examples of suitable alloys for rim substrate 22 include PRM48, ME16, IN100, Alloy 10 and LSHR powder metallurgy alloys. In some examples, rim substrate 22 can include less than 0.06% carbon. Rim substrate 22 can contain a gamma-prime alloy having a higher solvus temperature than the alloy of bore substrate 20. Rim substrate 22 typically has a coarser grain structure than bore substrate 20. In some embodiments, rim substrate 22 has an average grain size of ASTM size 6 to 8. Rim substrate 22 can be heat treated before being used to form hybrid disk 10. For example, in one embodiment, rim substrate 22 undergoes supersolvus heat treatment prior to TLP bonding so that grain growth occurs in rim substrate 22. Such heat treatment provides rim substrate 22 with properties generally desirable for rim region 14 of hybrid disk 10. This pre-bonding heat treatment can be performed before or after shaping of rim substrate 22.

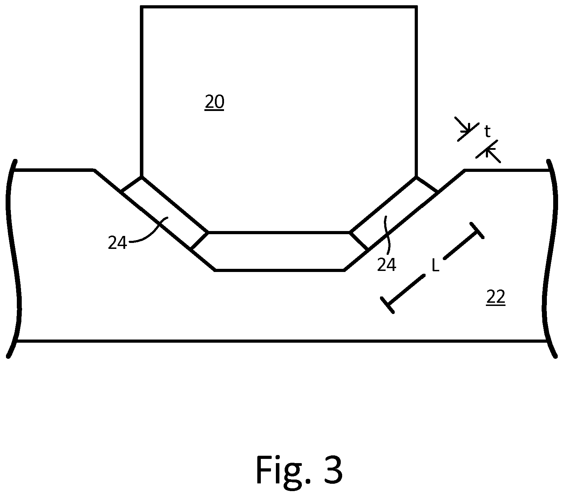

The TLP bonding process requires the use of an interlayer to join bore substrate 20 and rim substrate 22. An interlayer is a material dissimilar to that of the substrates being bonded, which melts at a lower temperature than either of the substrates. In this case, interlayer 24 (shown in Fig. 3) is a thin layer of material with a melting temperature that is lower than that of both bore substrate 20 and rim substrate 22. Interlayer 24 can be a thin layer of foil that contains a NiCr alloy and a melting point depressant, such as amorphous boron. In one embodiment, interlayer 24 is a NiCrB alloy such as Metglas® MBF-80 Nickel-Based Brazing Foil ("MBF-80"), available from Metglas, Inc. (Conway, SC). MBF-80 is an alloy containing 75-85 percent nickel, 10-20 percent chromium and 1-5 percent boron (all percentages by weight).

Interlayer 24 is positioned between one or more surfaces of bore substrate 20 and rim substrate 22. As shown in Fig. 3, two interlayer portions 24 are positioned between angled surfaces of bore substrate 20 and rim substrate 22. Interlayer 24 can be applied to either one of bore substrate 20 and rim substrate 22. Bore substrate 20 and rim substrate 22 are then pressed together such that interlayer 24 contacts surfaces of both bore substrate 20 and rim substrate 22. The thickness of interlayer 24 (shown in Fig. 3 by t) can vary depending on the properties of hybrid disk 10, bore substrate 20 and rim substrate 22 and the location of interlayer 24 relative to the axis of rotation. In some embodiments, the thickness of interlayer 24 is between about 0.1 mm (0.005 inches) and about 0.25 mm (0.010 inches). The length of interlayer 24 (shown in Fig. 3 by *l*) can vary depending on the properties of hybrid disk 10, bore substrate 20 and rim substrate 22, the angle at which bore substrate 20 and rim substrate 22 are bonded, the location of interlayer 24 relative to the axis of rotation and the geometry of bore substrate 20 and rim substrate 22.

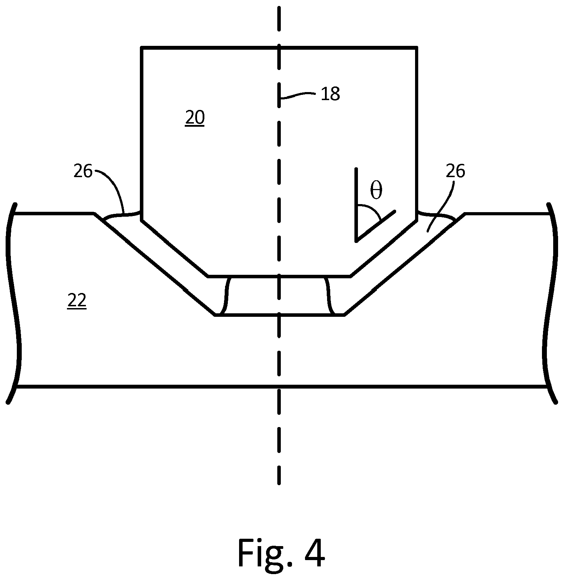

Once bore substrate 20 and rim substrate 22 are pressed together so that interlayer 24 contacts both bore substrate 20 and rim substrate 22, all three (bore substrate 20, rim substrate 22 and interlayer 24) are heated to melt interlayer 24 and isothermally solidify interlayer 24 to form a joint between bore substrate 20 and rim substrate 22. As the three elements are heated, interlayer 24 melts. Since bore substrate 20 and rim substrate 22 have higher melting temperatures than interlayer 24, the heating temperature used is one that is above the melting temperature of interlayer 24 but below the melting temperatures of both bore substrate 20 and rim substrate 22. As interlayer 24 melts, a thin layer of liquid spreads along the interface of bore substrate 20 and rim substrate 22 to form joint 26 (shown in Fig. 4). The elevated temperature is maintained to allow joint 26 to isothermally solidify. While the temperature is held above the melting point of interlayer 24, interdiffusion shifts the composition at joint 26 away from eutectic, increasing the melting point in the region of joint 26. This interdiffusion allows joint 26 to solidify at the melting temperature of interlayer 24. Once sufficient interdiffusion has occurred, solid-state joint 26 will remain solid and possess a melting point above the temperature used for isothermal solidification. Joint 26 can have a thickness and length similar to that of interlayer 24.

Bore substrate 20, rim substrate 22 and interlayer 24 can be placed in a furnace and heated to complete the melting and isothermal solidification processes described above. Once interlayer 24 has melted, the temperature can then be maintained within the furnace to allow isothermal solidification of interlayer 24. Alternatively, interlayer 24 and the nearby surrounding portions of bore substrate 20 and rim substrate 22 can be locally heated to melt interlayer 24 and the local temperature maintained to allow isothermal solidification of interlayer 24. In some embodiments, the furnace or, in the case of local heating, interlayer 24 is heated to a temperature between 1000 °C and 1100 °C to both melt interlayer 24 and isothermally solidify interlayer 24 to form joint.

Once joint 26 has been formed, the bonded bore substrate 20 and rim substrate 22 can be machined to remove remnants from the bond interface. Following machining, the part is inspected and then undergoes heat treatment cycles for stress relief and aging of the microstructures of bore substrate 20 and rim substrate 22. These heat treatment steps relieve residual stress in the part and improve material properties of bore substrate 20 and rim substrate 22. The post-bonding heat treatments do not affect the grain size of either bore substrate 20 or rim substrate 22. After stabilization and aging heat treatment, the part is finish machined into the desired shape to produce hybrid disk 10 and non-destructively evaluated. Alternatively, bore substrate and/or rim substrate 22 can undergo aging heat treatment prior to bonding. In this case, the post-welding heat treatment provides stress relief.

As shown in Figs. 2 through 4, the surfaces of bore substrate 20 and rim substrate 22 where interlayer 24 is applied and joint 26 is formed are angled relative to axis of rotation 18 (shown in Fig. 4 by angle *θ*). As shown, angle *θ* is about 45°. By forming joint 26 at a non-zero and a non-90° angle with respect to axis of rotation 18, the bond length (and resulting bond strength) of joint 26 is increased. In some embodiments, the bonding surfaces of bore substrate 20 and rim substrate 22 are angled between 5° and 85° relative to axis of rotation 18. In further embodiments, the bonding surfaces of bore substrate 20 and rim substrate 22 are angled between 15° and 75° relative to axis of rotation 18. In still further embodiments, the bonding surfaces of bore substrate 20 and rim substrate 22 are angled between 30° and 60° relative to axis of rotation 18. Thermal and stress analyses of hybrid disk 10 can be performed to determine optimal angles of the bonding surfaces of bore substrate 20 and rim substrate 22.

Joint 26 can be formed at a relatively low stress region of hybrid disk 10. A joint is often a "weaker" point within a component, and locating the joint in a region that is not subjected to excessive stress helps ensure that the joint holds during operation. Optimal locations for joint 26 within hybrid disk 10 will depend on the operating conditions of hybrid disk 10, as well as the compositions of bore region 12 and rim region 14. As with the bonding angle, thermal and stress analyses of hybrid disk 10 can be performed to determine optimal locations for joint 26. In some embodiments of hybrid disk 10, web region 16 is a region subjected to lower stress than portions of rim region 14, and joint 26 is located within web region 16. In some cases, joint 26 can be radially located between 50 percent and 80 percent of the radius of hybrid disk 10 (the distance from axis of rotation 18 to the radially outer surface of rim region 14).

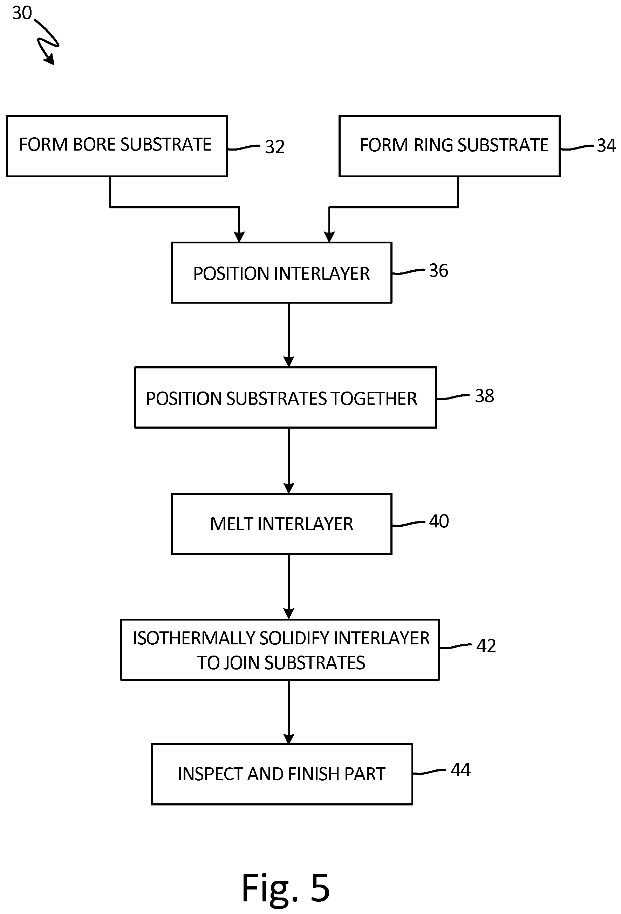

Fig. 5 schematically illustrates one embodiment of method 30 for preparing hybrid disk 10. In steps 32 and 34 of method 30, bore substrate 20 and rim substrate 22 are prepared, respectively. As noted herein, step 32 can include a subsolvus heating treatment, and step 34 can include a supersolvus heating treatment. In step 36, one or more interlayers 24 are applied to one of bore substrate 20 and rim substrate 22 at a location where the formation of joint 26 is desired. In step 38, bore substrate 20 and rim substrate 22 are positioned together so that interlayer 24 extends between surfaces of bore substrate 20 and rim substrate 22. The combined substrates and interlayer are exposed to an elevated temperature in steps 40 and 42. In step 40, interlayer 24 melts forming a liquid joint between bore substrate 20 and rim substrate 22. In step 42, interlayer 24 isothermally solidifies to form solid-state joint 26 between bore substrate 20 and rim substrate 22. Finally, in step 44, the joined parts are inspected, stabilization and aging heat treatments are performed, and the part is finish machined to form hybrid disk 10. Variations on the method illustrated in Fig. 5 are described above.

The steps described herein produce a hybrid disk having specific features. A hybrid disk prepared according to the method illustrated in Fig. 5 can have a bore portion having an average grain size between ASTM 11 and ASTM 9, a rim portion having an average grain size between ASTM 8 and ASTM 6, and a web portion located between the bore portion and the rim portion. The web portion includes an isothermally solidified joint formed adjacent to a radially outer surface of the bore portion and a radially inner surface of the rim portion. The isothermally solidified joint is angled between 5 degrees and 85 degrees relative to the axis of rotation of the hybrid disk.

As described herein, hybrid disk 10 includes at least two different materials. One material is optimal for bore region 12 of hybrid disk 10; the other material is optimal for rim region 14 of hybrid disk 10. This allows hybrid disk 10 to have optimal materials at both bore region 12 and rim region 14. TLP bonding is used to join the two materials along the web of hybrid disk 10 (web region 16). The two materials are joined at web region 16 to locate joint 26 in a region of relatively low stress on hybrid disk 10. Prior to bonding, each of the two different materials can be heat treated to produce the desired properties and grain structures (e.g., finer grain structure near the bore, coarser grain structure at the rim). This eliminates the need for post-bonding heat treatments that change the grain size of the materials.

### Discussion of Possible Embodiments

The following are non-exclusive descriptions of possible embodiments of the present invention.

A method of forming a hybrid component having an axis of rotation can include forming a first substrate having a first average grain size; forming a second substrate having a second average grain size different from the first average grain size; positioning an interlayer on one of the first and second substrates; positioning a portion of the first substrate adjacent a portion of the second substrate such that the interlayer extends between the portion of the first substrate and the portion of the second substrate; heating the first and second substrates and the interlayer at a temperature below the melting points of the first and second substrates to melt the interlayer; and isothermally solidifying the interlayer to form a solid-state joint between the portions of the first and second substrates.

The method of the preceding paragraph can optionally include, additionally and/or alternatively, any one or more of the following features, configurations and/or additional components:
The first substrate can form a bore region and a first web portion of a hybrid disk, and the second substrate can form a second web portion and a rim region of the hybrid disk such that the joint is located at a web region of the hybrid disk.

The first average grain size can be finer than the second average grain size.

The first average grain size can be between ASTM 11 and ASTM 9, and the second average grain size can be between ASTM 8 and ASTM 6.

The joint can be angled between 5 degrees and 85 degrees relative to the axis of rotation. The joint can be angled between 15 degrees and 75 degrees relative to the axis of rotation.

The joint can be located between 50 percent and 80 percent of a radial distance from the axis of rotation to an outer edge of the rim region formed by the second substrate.

The interlayer can include nickel, chromium and boron.

The interlayer can include 75-85 weight percent nickel, 10-20 weight percent chromium and 1-5 weight percent boron.

The interlayer can have a thickness between 0.1 millimeters and 0.25 millimeters.

The first and second substrates and the interlayer can be heated to a temperature between 1000 °C and 1100 °C.

The step of isothermally solidifying the interlayer can occur at a temperature between 1000 °C and 1100 °C.

A method of forming a hybrid disk having an axis of rotation can include forming a bore substrate having a first average grain size; forming a rim substrate having a second average grain size different from the first average grain size; positioning an interlayer on one of the bore substrate or the rim substrate; positioning a portion of the bore substrate adjacent to a portion of the rim substrate such that the interlayer contacts both the portion of the bore substrate and the portion of the rim substrate; heating the bore and rim substrates and the interlayer at a temperature below the melting points of the bore and rim substrates to melt the interlayer; and isothermally solidifying the interlayer to form a solid-state joint between the bore and rim substrates along a web of the hybrid disk.

The method of the preceding paragraph can optionally include, additionally and/or alternatively, any one or more of the following features, configurations and/or additional components:
The first average grain size can be between ASTM 11 and ASTM 9, and the second average grain size can be between ASTM 8 and ASTM 6.

The joint can be angled between 5 degrees and 85 degrees relative to the axis of rotation.

The joint can be located between 50 percent and 80 percent of a radial distance from the axis of rotation to an outer edge of the rim substrate.

The method can further include performing post-bonding heat treatments on the hybrid disk and finish machining the hybrid disk.

The interlayer can include 75-85 weight percent nickel, 10-20 weight percent chromium and 1-5 weight percent boron.

A hybrid disk can include a bore portion having an average grain size between ASTM 11 and ASTM 9; a rim portion having an average grain size between ASTM 8 and ASTM 6; and a web portion located between the bore portion and the rim portion, the web portion having an isothermally solidified solid-state joint formed adjacent to a radially outer surface of the bore portion and a radially inner surface of the rim portion where the isothermally solidified joint is angled between 5 degrees and 85 degrees relative to an axis of rotation of the hybrid disk.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a hybrid component (10) having an axis of rotation (18), the method comprising:
forming a first substrate (20) having a first average grain size;
forming a second substrate (22) having a second average grain size different from the first average grain size;
positioning an interlayer (24) on one of the first and second substrates (20, 22);
positioning a portion of the first substrate (20) adjacent a portion of the second substrate (22) such that the interlayer (24) extends between the portion of the first substrate (20) and the portion of the second substrate (22);
heating the first and second substrates (20, 22) and the interlayer (24) at a temperature below the melting points of the first and second substrates (20, 22) to melt the interlayer (24); and
isothermally solidifying the interlayer (24) to form a solid-state joint (26) between the portions of the first and second substrates (20, 22).

2. The method of claim 1, wherein the first substrate (20) forms a bore region (12) and a first web portion of a hybrid disk (10), and wherein the second substrate (22) forms a second web portion and a rim region (14) of the hybrid disk (10) such that the joint (26) is located at a web region (16) of the hybrid disk (10).

3. The method of claim 2, wherein the joint (26) is located between 50 percent and 80 percent of a radial distance from the axis of rotation (18) to an outer edge of the rim region (14) formed by the second substrate (22).

4. The method of claim 1, 2 or 3, wherein the first average grain size is finer than the second average grain size.

5. The method of claim 4, wherein the first average grain size is between ASTM 11 and ASTM 9, and wherein the second average grain size is between ASTM 8 and ASTM 6.

6. The method of any preceding claim, wherein the joint (26) is angled between 5 degrees and 85 degrees relative to the axis of rotation (18).

7. The method of claim 6, wherein the joint (26) is angled between 15 degrees and 75 degrees relative to the axis of rotation (18).

8. The method of any preceding claim, wherein the interlayer (24) comprises nickel, chromium and boron.

9. The method of claim 8, wherein the interlayer (24) comprises 75-85 weight percent nickel, 10-20 weight percent chromium and 1-5 weight percent boron.

10. The method of any preceding claim, wherein the interlayer (24) has a thickness between 0.1 millimeters and 0.25 millimeters.

11. The method of any preceding claim, wherein the first and second substrates (20, 22) and the interlayer (24) are heated to a temperature between 1000 °C and 1100 °C.

12. The method of claim 11, wherein the step of isothermally solidifying the interlayer (24) occurs at a temperature between 1000 °C and 1100 °C.

13. The method of any preceding claim, wherein the hybrid component (10) is a hybrid disk (10), the first substrate (20) is a bore substrate (20) and the second substrate (22) is a rim substrate (22), the method further comprising:
positioning the portion of the bore substrate (20) adjacent to the portion of the rim substrate (22) such that the interlayer (24) contacts both the portion of the bore substrate (20) and the portion of the rim substrate (22); and
forming the solid-state joint (26) between the bore and rim substrates (20, 22) along a web (16) of the hybrid disk (10).

14. The method of claim 13, further comprising:
performing post-bonding heat treatments on the hybrid disk (10); and finish machining the hybrid disk (10).

15. A hybrid disk (10) comprising:
a bore portion (12) having an average grain size between ASTM 11 and ASTM 9;
a rim portion (14) having an average grain size between ASTM 8 and ASTM 6; and
a web portion (16) located between the bore portion (12) and the rim portion (14), the web portion (16) comprising an isothermally solidified solid-state joint (26) formed adjacent to a radially outer surface of the bore portion (12) and a radially inner surface of the rim portion (14), wherein the isothermally solidified joint (26) is angled between 5 degrees and 85 degrees relative to an axis of rotation (18) of the hybrid disk (10).
